# EUROPÄISCHE PATENTSCHRIFT

(11) **EP 0 589 480 B1**
(45) Veröffentlichungstag und Bekanntmachung des Hinweises auf die Patenterteilung: **03.09.1997**
(21) Anmeldenummer: 93115460.3
(22) Anmeldetag: 24.09.1993
(51) Int. Cl.: B62K 27/12, B62H 1/02

(54) **Kupplung zum Anhängen eines Fahrradanhängers an einem Fahrradrahmen**
Hitch to tow a bicycle-trailer to a bicycle-frame
Attelage de remorque d'une remorque pour bicyclette à un cadre de bicyclette

(30) Priorität: 24.09.1992 DE 9212885 U
(43) Veröffentlichungstag der Anmeldung: 30.03.1994
(73) Patentinhaber: Weber, Herbert, D-83254 Breitbrunn (DE)
(72) Erfinder: Weber, Herbert, D-83254 Breitbrunn (DE)
(74) Vertreter: Flach, Dieter Rolf Paul, Dipl.-Phys.

(56) Entgegenhaltungen:
- FR-A- 870 653
- US-A- 3 567 249

## Beschreibung

Die Erfindung betrifft eine Kupplung zum Anhängen eines Fahrradanhängers an einem Fahrradrahmen nach dem Oberbegriff des Anspruches 1.

Fahrradanhänger, heute auch kurz Bike-Anhänger genannt, haben mittlerweile zunehmende Bedeutung und Beliebtheit erlangt. Ob zu Einkaufsfahrten oder auf einer Wochenendfahrt in der Natur dient dieser Fahrradanhänger als "Kutsche" für Kinder und Kleinkinder. Genauso können diese Fahrradanhänger aber auch als Einkaufswagen oder zum Transport anderer Gegenstände benutzt werden.

Die in der Regel einachsigen, mit einem kastenförmigen Hängerrahmen versehenen Fahrradanhänger weisen eine einarmige Deichsel auf, die am Fahrrad angehängt werden kann. Eine erste Generation von Fahrrad-Anhängern ist mit einer in der vertikalen Längssymmetrieachse des Fahrrad-Anhängers liegende Deichsel versehen, die von den vergleichsweise niedrig liegenden Anhängerrahmen über ein ansteigendes Mittelstück hochgeführt und im Bereich hinter dem Fahrradsattel oder dem Fahrrad-Gepäckständer obenliegend verankert werden. Probleme treten aber hier nicht nur bei der Verankerung, sondern auch bei Kurvenfahrten oder einer sonstigen seitlichen Verkippung des Fahrrades auf.

Aus der FR-A-870 653 ist ein in der vertikalen Symmetrieebene des Fahrrades anhängbarer Fahrradanhänger gezeigt. Dazu wird in Verlängerung der Kettenstreben ein das Hinterrad U-bogenförmig umgreifender Bügel an der Hinterradachse montiert. Dieser Bügel wird über zwei seitliche Streben am oberen Kreuzungspunkt im Übergang vom Oberholm zum Sitzholm befestigt und getragen. Über ein eine Verdrehung in zwei Achsen erlaubendes Kardangelenk ist der Fahrradanhänger angehängt.

Eine zweite Generation von Fahrrad-Anhängern sind ebenfalls mit einer einarmigen Deichsel versehen, die am Fahrradanhänger zur vertikalen Anhänger-Symmetrieachse seitlich versetzt angebracht ist und am Fahrrad an der gleichen Seite, also z. B. links vom Hinterrad verankert werden können. Bei einem bekannten Fahrradanhänger wird die Verankerung des vorlaufenden Endes der Anhängerdeichsel im hinteren Winkelbereich der Ketten- und Sitzstrebe des Fahrradrahmens vorgenommen. Hier müssen spezielle Montageschellen angebracht werden. An diesen Montageschellen greift als Zugverbindung zur Anhängerdeichsel eine Spiralfeder an. Über die Spiralfeder wird eine gewisse gelenkige Verbindung zwischen Fahrrad und Hänger gewährleistet, um Kurvenfahrten und in den Kurvenfahrten auch ein seitliches "Neigen" des Fahrrades und des Fahrradfahrers gegenüber dem Fahrradanhänger zu gewährleisten.

Aus der US-A-3,567,249 ist ein einrädriger Fahrradanhänger bekannt geworden, der an der Hinterradachse oder mittels einer zweischaligen Zwischen den Ketten- und den Sitzstreben verlaufenden Klemme am Fahrrad befestigbar ist. Dieser einrädrige Fahrradanhänger neigt sich mit der Neigung des Fahrrades.

Schließlich ist aus der EP-B1-0 409 352 ein an den beiden unteren Kettenstreben montierbarer Fahrradständer bekannt geworden, der nicht im hinteren Winkelbereich zwischen den Sitz- und Kettenstreben, sondern in dem Bereich zwischen dem Tretlager und dem Reifen des Hinterrades montierbar ist. Eine Möglichkeit zur Befestigung eines Fahrradanhängers ist an diesem Fahrradständer nicht vorgesehen.

Bei den nach dem Stand der Technik bekannten Lösungen erweist sich jedoch als nachteilig die vergleichsweise aufwendige Montage und Anbringung der Fahrradanhänger-Kupplung. Probleme treten auch insbesondere bei engen Kurvenfahrten und starker Neigung des Fahrrades aus der vertikalen Ebene heraus auf. Durch die metallische Verbindung von Deichsel zum Fahrradrahmen ergeben sich insgesamt durch Vibrationen und Mitschaukelbewegungen nicht unbeachtliche Fahrgeräusche. Schließlich wird die Fahrradstabilität auch bei abgestelltem Fahrrad mit noch angehängten Fahrradanhängernachteilig beeinträchtigt.

Aufgabe der vorliegenden Erfindung ist es von daher, den Nachteil aus dem Stand der Technik zu überwinden und eine Kupplung zum Anhängen eines Fahrradanhängers an einem Fahrradrahmen zu gewährleisten, der eine hohe Sicherheit beim Fahren wie aber auch Standsicherheit bei einem mittels eines Fahrradständers abgestellten Fahrrades aufweist. In einer fortlaufenden Weiterbildung der Erfindung soll auch die Handhabung beim An- und Abkoppeln des Fahrradanhängers verbessert werden.

Die Aufgabe wird entsprechend den im Anspruch 1 angegebenen Merkmalen gelöst. Vorteilhafte Ausgestaltungen der Erfindung sind in den Unteransprüchen angegeben.

Die erfindungsgemäße Fahrrad-Kupplung kann leicht und schnell montiert werden und ist dabei vergleichsweise unkompliziert aufgebaut. Vor allem aber bietet sie gegenüber bekannt gewordenen Lösungen eine deutlich verbesserte und erhöhte Sicherheit. Dies gilt vor allem auch für ein mittels eines Fahrradständers abgestelltes Fahrrad, das bei bekannt gewordenen Lösungen eher dazu neigt, aufgrund der einseitig am Fahrradrahmen angreifenden verankerten Deichsel zu kippen.

Erfindungsgemäß hat sich nämlich gezeigt, daß eine im Bereich der Hinterradachse, also im Bereich des Rahmenwinkels von Ketten- und Sitzstrebe angreifende Verankerung der Deichsel eine ausreichende Standstabilität eines mittels eines Fahrradständers abgestellten Fahrrades nur dann gewährleistet werden kann, wenn auch der Fahrradständer in diesem hinteren Bereich montiert und bei Ausschwenken wirksam ist. Bei in diesem Bereich angebrachten Montageschellen aber sind Fahrradständer in diesem Bereich dann nicht mehr anbringbar, sondern, wie ansonsten auch, nur in dem zu den Tretlagern benachbarten Bereich, also eher im mittleren Bereich des Fahrrades. Dies führt aber nicht zu der gewünschten Standstabilität.

Die erfindungsgemäße Rahmen-Koppeleinheit, an welcher die Deichsel des Fahrradanhängers anbringbar ist, umfaßt dazu ebenfalls einen Montageansatz, an welchem ein Fahrradständer verschwenkbar abgestützt und gehalten ist. Vor allem wird erfindungsgemäß ein kardanisches Gelenk als Kupplungselement für den anhängbaren Fahrradanhänger verwendet, der zudem eine Verdrehmöglichkeit um eine dritte zu den anderen Kardanachsen weitere Achse erlaubt. Dadurch ist es möglich, daß mit geringsten Reibungswerten der Fahrradanhänger auch bei einem in Kurven fahrenden geneigten Fahrrad problemlos dem Fahrrad folgen kann.

Um den Fahrkomfort zu verbessern und mögliche Geräuschwirkung zu vermindern, kann dieses bevorzugt aus geschlossenen, ineinandergreifenden Ösen bestehende kardanische Gelenk mit einem Kunststoffdämpfer versehen sein, so daß die bevorzugt aus Metall bestehenden geschlossenen Ösen keine Kontaktwirkung Metall auf Metall erlauben, sondern durch ein dazwischen befindliches Kunststoffelement gedämpft sind. Selbst bei Zerstörung des Kunststoffelementes aber sind die Ösen ineinander unverlierbar gehalten.

Durch die gesamte Anordnung ist die Verbindung sowohl in Zug- als auch in Schubrichtung stabil und spielfrei, ohne daß sich das ganze System, wie bei Verwendung einer Spiralfeder, aufschaukeln kann.

Schließlich wird die gesamte Handhabung durch Verwendung eines Sicherheits-Schnellverschlusses noch weiter verbessert, worüber der Fahrradanhänger, d.h. im konkreten die Deichsel einfach, schnell und sicher am Fahrradrahmen angebracht und wieder gelöst werden kann. Dies kann durch einen Schnapp- oder beispielsweise Bajonettverschluß erfolgen.

In einer weiteren Ausgestaltung der Erfindung umfaßt das Rahmen-Kupplungselement im wesentlichen nur eine Montageplatte, die mittels Klemmeinrichtungen an dem Fahrradrahmen befestigt werden. Diese Klemmeinrichtungen wirken dabei bevorzugt nicht mittels Schellen, Bügeln etc., sondern mittels eines auf der Rückseite der Streben herumgeführten Spannbandes zusammen, welches mittels Schrauben festgezogen werden kann.

Dies eröffnet eine höchst einfache Montagemöglichkeit.

Darüber hinaus kann das Rahmen-Kupplungselement in einer Weiterbildung der Erfindung mit einer Anpassungsmöglichkeit an die unterschiedliche Ausgestaltung und den unterschiedlichen Verlauf des Fahrradrahmens ausgestattet sein. In einer bevorzugten Ausführungsform ist dabei das Rahmen-Kupplungselement auch bei einem sog. Mixt-Rahmen montierbar, bei welchem am sog. Ausfallende (an welchem das Hinterrad gehalten und montiert wird) nicht nur eine untere, im wesentlichen horizontal verlaufende Ketten- und eine zum Sitz ansteigende Sitzstrebe, sondern beispielsweise auch eine in der Mitte verlaufende Mittelstrebe noch zusätzlich zusammengeführt sind. Das Rahmen-Kupplungselement kann diese Mittelstrebe überbrücken. Mit anderen Worten stellen unterschiedliche Fahrradrahmen keinen Hinderungsgrund zum Anbau des erfindungsgemäßen Rahmen-Kupplungselementes dar.

Häufig besitzen Trommelbremsen, ebenso wie Nabenschaltungen, als Gegenhalter einen Hebel, der an der Kettenstrebe befestigt ist. Bei der Gestaltung des erfindungsgemäßen Rahmen-Kupplungselementes entsprechend einem weiteren Ausführungsbeispiel ist die Anbau- oder Montageplatte so geformt und festgelegt, daß das erwähnte Spannband links und/oder rechts von der Bremshebellasche verlegt werden kann und dadurch der Bremshebel nach unten hin einen ausreichenden Freiraum besitzt.

Ausführungsbeispiele der Erfindung werden nachfolgend anhand von Zeichnungen näher erläutert. Dabei zeigen im einzelnen:
- Figur 1 :: eine schematische auszugsweise perspektivische Darstellung eines Hinterrades eines Fahrrades mit dem frontseitigen, aus einer Ketten- und Sitzstrebe bestehenden V-förmig aufeinanderzulaufenden Fahrrad-Winkel mit dem montierten erfindungsgemäßen Rahmen-Kupplungselement;
- Figur 2 :: eine Innenseitenansicht auf die eine Montageplatte des erfindungsgemäßen Rahmen-Kupplungselementes bei abgenommener zweiten Montageplatte;
- Figur 3 :: eine in horizontaler rückwärtiger Betrachtung wiedergegebene Darstellung der ersten in Figur 2 dargestellten Montageplatte bei abgenommener zweiter Montageplatte;
- Figur 4 :: eine schematische Darstellung der Gesamtverbindung von Deichsel zum Rahmen-Kupplungselement unter Verwendung einer kardanischen Zugverbindung;
- Figur 5 :: eine schematische auszugsweise vergrößerte Darstellung der kardanischen Verbindung;
- Figur 6 :: eine schematische Vertikalschnittdarstellung durch das horizontale Rahmenrohr mit dem darauf sitzenden und angebauten Rahmen-Kupplungselement;
- Figur 7 :: eine schematische Seitendarstellung bezüglich des Ausführungsbeispieles nach Figur 6 ;
- Figur 8 :: eine Draufsicht auf das in Figur 6 eingebaute Spannband zur Befestigung des Rahmen-Kupplungselementes;
- Figur 9 :: eine schematische perspektivische rückwärtige Ansicht einer weiteren, bevorzugt an der Sitzstrebe montierbaren Klemmeinrichtung bei teilweise abgeschnittener Sitzstrebe.

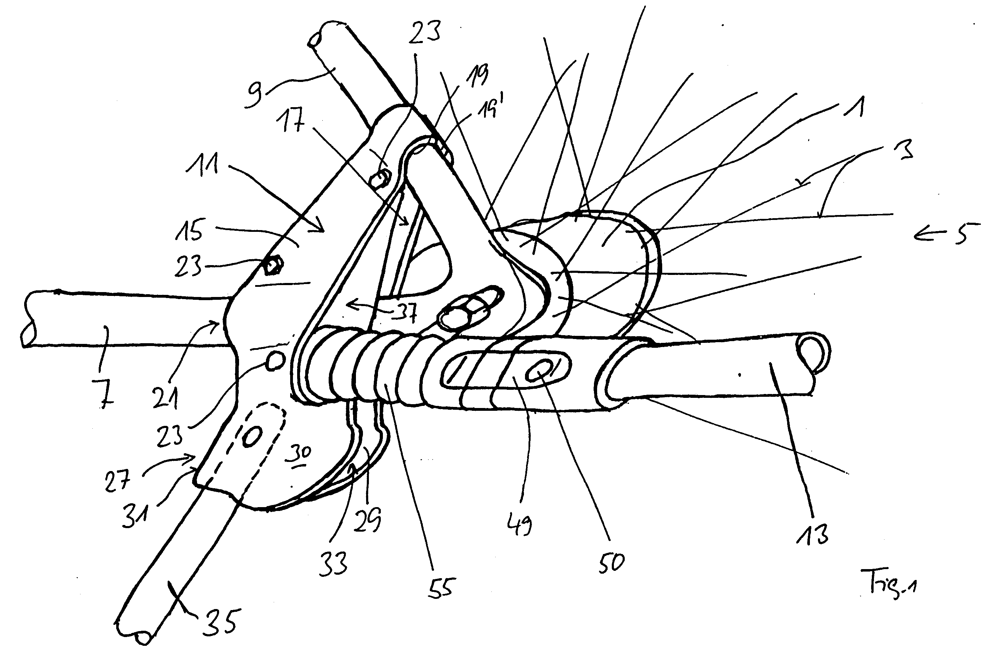

In Figur 1 ist auszugsweise in schematischer perspektivischer Darstellung ein Hinterrad eines Fahrrades gezeigt, von dem lediglich die Nabe 1 und davon radial ausgehend Speichen 3 ersichtlich sind.

Ein derartiges Hinterrad 5 ist bekanntermaßen über zwei zum Hinterrad 5 seitlich gegenüberliegende zu einem Fahrradrahmen gehörende Rahmenteile verankert und gehalten, von welchen in Figur 1 lediglich die zum Pedallager führende Kettenstrebe 7 und die nach oben verlaufende Sitzstrebe 9 dargestellt sind. Die Kettenstrebe 7 und die Sitzstrebe 9 laufen im Bereich der Hinterradachse V-förmig zusammen. Die auf der rechten Seite des Hinterrades 5 ebenso verlaufende Ketten- und Sitzstrebe sind der Einfachheit halber in Figur 1 nicht dargestellt.

An der in Figur 1 auf der linken Fahrradseite vorgesehenen Ketten- und Sitzstrebe 7, 9 ist im hinteren Winkelbereich zwischen beiden ein Rahmen-Kupplungselement 11 montiert, an welchem eine zu einem in der Zeichnung nicht näher dargestellten Fahrradanhänger gehörende einarmige Anhänger-Deichsel 13 lösbar verankert ist.

Wie bereits aus Figur 1 hervorgeht, besteht das Rahmen-Kupplungselement 11 aus zwei Teilen, nämlich einer größeren entsprechend vorgeformten und geprägten Montageplatte 15 und einer damit zusammenwirkenden zweiten demgegenüber kleineren Montageplatte 17.

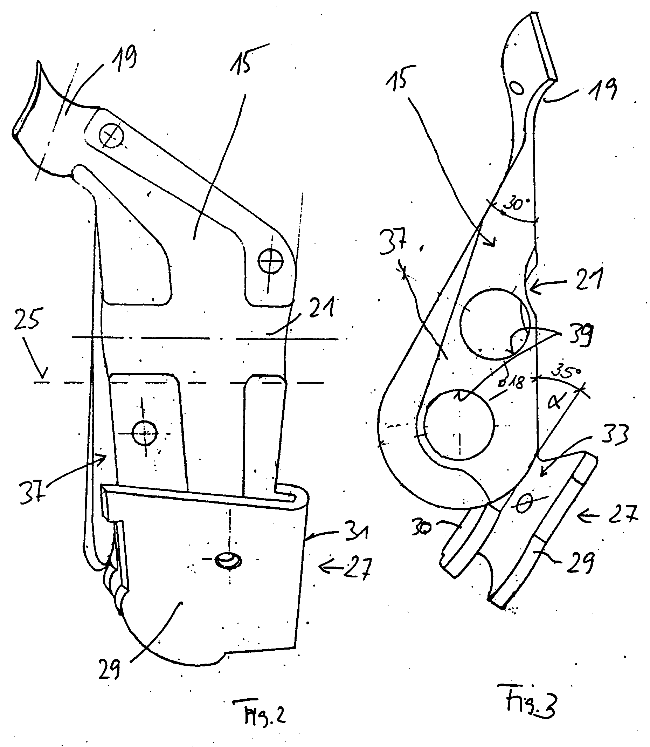

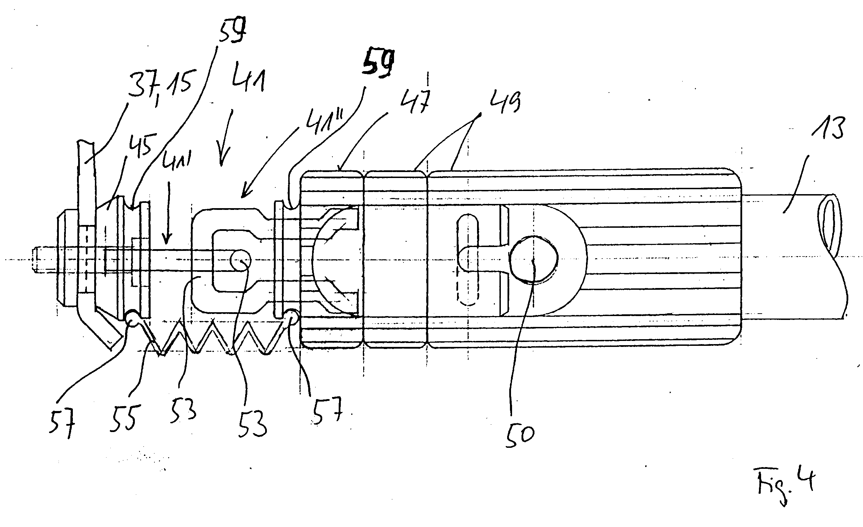

Aus der Darstellung insbesondere von Figur 2 und 3 geht hervor, daß die größere Montageplatte 15 eine obere halbzylinderförmige Ausprägung 19 und eine demgegenüber tiefer liegende ebenfalls halbzylinderförmige Ausprägung 21 aufweist, die mit entsprechend gegensinnig halbzylinderförmigen Ausprägungen 19' und 21' der zweiten Montageplatte 17 zusammenwirken und so ausgerichtet sind, daß sie, wie in Figur 1 dargestellt, an der Sitz- und Kettenstrebe 9, 7 befestigt werden können. Dazu sind in der hinteren und vorderen Montageplatte jeweils entsprechende Bohrungen vorgesehen, durch welche Zylinderschrauben hindurchgesteckt und mittels Muttern auch fest aufeinander zugezogen werden können.

Die Schraubverbindungen sind in Figur 1 mit dem Bezugszeichen 23 versehen.

Die kürzere, im gezeigten Ausführungsbeispiel dem Hinterrad 5 näher liegende Montageplatte 17 ist im wesentlichen symmetrisch zur vorderen Montageplatte 15 ausgebildet, endet aber in etwa längs der strichlierten Linie 25 in Figur 2. Im montierten Zustand umgreifen also die oberen und unteren halbzylinderförmigen Ausprägungen 19, 19' bzw. 21 und 21' backenförmig sowohl die Ketten- als auch Sitzstrebe 7, 9, so daß beim Festziehen der erwähnten Schraubverbindung 23 das so gebildete Rahmen-Kupplungselement 11 im hinteren Bereich des Fahrradrahmens, d.h. also im Bereich seiner Hinterradachse fest sitzt und unverlierbar gehalten ist.

Im gezeigten Ausführungsbeispiel weist die nach außen, also vorne liegende größere Montageplatte 15 einen tiefer liegenden, d.h. unterhalb der Kettenstrebe 7 liegenden Montageansatz 27 auf, der einstückig mit der Montageplatte 15 verbunden ist und der einen im wesentlichen horizontal verlaufenden Bandabschnitt 29 umfaßt, der um eine vorlaufende Biegekante 31 unter Ausbildung einer offenen Tasche 33 umgebogen ist, daß er im wesentlichen deckungsgleich zum vorne aufliegenden Wandabschnitt 30 liegt. Der in Seitenansicht vorne aufliegende Wandabschnitt 30 und der dahinter liegende, in einem Seitenabstand von etwa 10 mm liegende Wandabschnitt 29 bilden eine offene Tasche, in welchem werkseitig bereits ein Fahrradständer 35 vormontiert sein kann. Der Fahrradständer 35 weist die übliche Verschwenkcharakteristik auf und ist in seiner in Figur 1 dargestellten Standposition wie in einer im wesentlichen horizontal eingeschwenkten Fahrposition jeweils durch eine nicht näher dargestellte Verkippcharakteristik gegen unbeabsichtigtes Verschwenken hieraus gehalten.

Aus Figur 3 ist auch ersichtlich, daß die aus den beiden Wandabschnitten 29, 31 gebildete offene Tasche 33 zur Vertikalen um einen Winkel α von 35° nach außen hin geneigt ist. Durch diesen Neigungswinkel α wird die seitliche Ausstellrichtung des Fahrradständers festgelegt.

Die äußere, den unteren Montageansatz 27 für den Fahrradständer 35 umfassende Montageplatte 15 ist darüber hinaus mit einem nachlaufenden Winkelansatz oder Flansch 37 versehen, in welchem zumindest eine, im gezeigten Ausführungsbeispiel zwei Bohrungen 39 eingebracht sind. Der Winkelansatz ist um etwa 90° zur vertikalen Fahrradlängsebene in Seitenrichtung abgewinkelt. An diesem Winkelansatz 37 wird die Anhänger-Deichsel 13 mittelbar abgestützt und eingehängt.

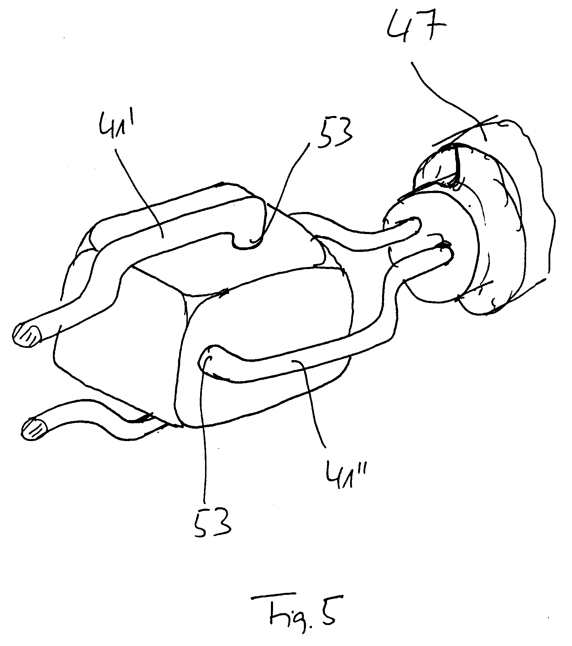

Dazu ist ferner ein aus Figur 4 ersichtliches Kardangelenk 41 vorgesehen, dessen eine Kardangelenkhälfte 41' über einen Verdrehansatz 45 fest gehalten ist, welcher in der im gezeigten Ausführungsbeispiel tiefer liegenden Bohrung 39 am Winkelansatz 37 unverlierbar fest, aber drehbar verankert ist. Dies kann durch Gegendrehen einer entsprechenden, die Bohrung 39 rückseitig übergreifenden Abstützmuffe erfolgen, oder durch sonstige geeignete Maßnahmen.

Die zweite Kardangelenkhälfte 41'' ist mit einem rohrförmigen Steckansatz 47 versehen, welcher in einer Schnellverschluß-Kupplungshülse 49 lösbar verankert werden kann. Die Kupplungshülse 49 ist unverlierbar fest am vorderen Ende der Anhänger-Deichsel 13 angebracht.

Im gezeigten Ausführungsbeispiel bestehen die beiden Kardangelenkhälften 41' und 41'' aus jeweils einer geschlossenen Öse, die um 90° gegeneinander verdreht ausgerichtet sind und sich mit ihrem betreffenden Ösenabschnitt jeweils durchsetzen.

Dadurch sind beide Ösen unverlierbar ineinander geführt.

Um jegliches Spiel in Zug- bzw. Schubrichtung zu vermeiden und darüber hinaus eine auch Geräusche minimierende Dämpfung zu ermöglichen ist - wie sich insbesondere aus Figur 5 ergibt - zwischen beiden, die Kardangelenke 41' und 41'' bildenden Ösen ein Dämpfungselement 51 vorgesehen, welches bevorzugt aus Kunststoff besteht.

Die die jeweilige Öse quer durchsetzenden Ösenabschnitte 53 sind dabei in dem Dämpfungselement 51 in einem entsprechenden Bogen hindurchzuführen.

Selbst wenn das Dämpfungselement 51 beschädigt oder sogar zerstört und herausgefallen sein sollte, sind die ösenförmigen Kardangelenkhälften 41' und 41'' immer noch unverlierbar ineinander geführt und fest verankert.

Im gezeigten Ausführungsbeispiel ist das Kardangelenk 41 noch über einen Balg 55, nämlichen einen Gummi-Balg, abgedeckt und abgeschirmt, welcher mit einem stirnseitigen Wulst 57 in eine Ringnut 59 einmal am fahrradseitigen Verankerungsansatz 45 und zum anderen am rohrförmigen Steckansatz 47 eingreift.

Im gezeigten Ausführungsbeispiel liegt die Trenn- und Schnittstelle zum Ab- und Ankoppeln des Fahrradanhängers zwischen dem rohrförmigen Steckansatz 47 und der Kupplungs-Hülse 49. Der hierdurch in geeigneter Weise gebildete Sicherheits-Schnellverschluß kann beispielsweise durch Betätigen des Knopfes 50 gelöst werden. Durch Einstecken kann beispielsweise eine automatische Einrastung erfolgen. Möglich ist, wie erwähnt, auch ein Bajonettverschluß mit einer zusätzlichen Auslösesicherung, z. B. in Form des zu betätigenden Knopfes 50. Im Falle einer sogenannten Sicherheitsversion kann dieser Sicherungs-Knopf auch als verriegelbares Einbauschloß ausgebildet sein oder mit einem Schloß zur Erzielung einer Diebstahlsicherung zusammenwirken.

Bei abgehängtem Anhänger bleibt die Kardangelenkverbindung 41 mit dem daran fest angehängten rohrförmigen Steckansatz 47 frei herabhängend am Fahrradrahmen befestigt. Dies ist jedoch mit keinem Nachteil verbunden, insbesondere wegen der geringen Baulänge der gesamten Einheit.

Abweichend vom gezeigten Ausführungsbeispiel kann aber die Schnittstelle auch an anderer Stelle vorgesehen sein, nämlich insbesondere im Bereich des Winkelansatzes 37. In diesem Falle würde beispielsweise der rohrförmige Steckansatz 47 mit der anhängerseitig nachfolgenden Kardangelenk-Verbindung 41 fest am Deichselende des Fahrradanhängers verbleiben.

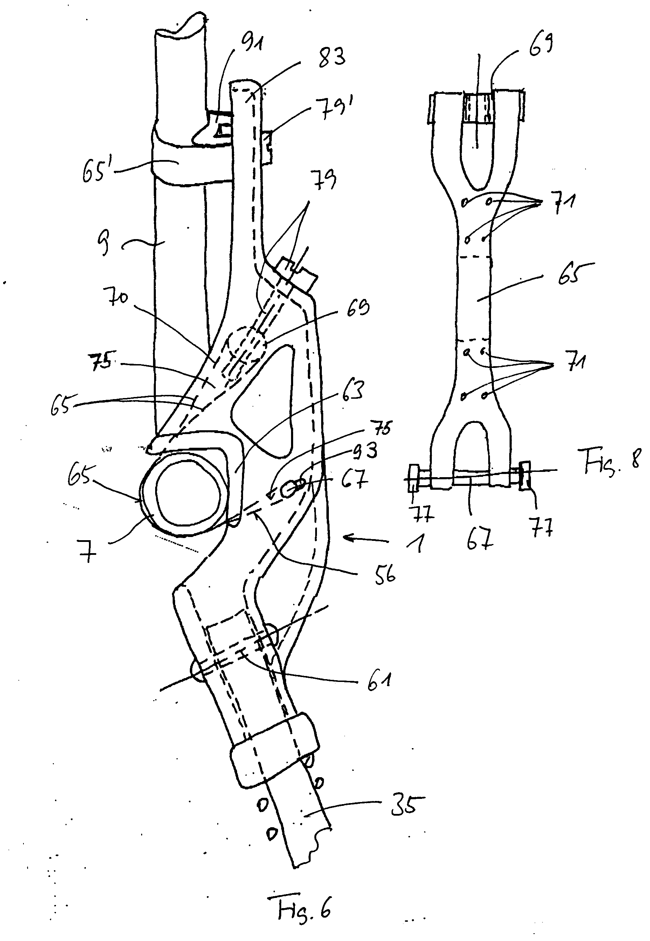

Nachfolgend wird auf das Ausführungsbeispiel gemäß den Figuren 6 ff. Bezug genommen.

Im Ausführungsbeispiel gemäß den Figuren 6 ff. besteht das Rahmen-Kupplungselement 11 nicht aus zwei zusammenwirkenden Montageplatten 15 und 17, sondern lediglich aus einer einzigen bevorzugt außenliegenden Montageplatte 15, die letztlich von der nach oben verlaufenden Sitzstrebe 9 bis über die im wesentlichen horizontal verlaufende Kettenstrebe 7 bis zu einem unten liegenden Wandabschnitt 30 verläuft, an welchem der Fahrradständer an einer Achse 61 gelenkig verankert ist.

In diesem Ausführungsbeispiel weist das aus dieser einen Montageplatte 15 bestehende Rahmen-Kupplungselement eine innenliegende, im Querschnitt gemäß Figur 6 im wesentlichen winkelförmig in einen Winkel von etwa 90° ausgebildete sog. prismatische Auflage 63 auf, mit welcher das Rahmen-Kupplungselement an der betreffenden Kettenstrebe 7 aufgelegt werden kann. Eine Anpassung an einen bestimmten Durchmesser oder Formgebung der Kettenstrebe 7 ist nicht erforderlich.

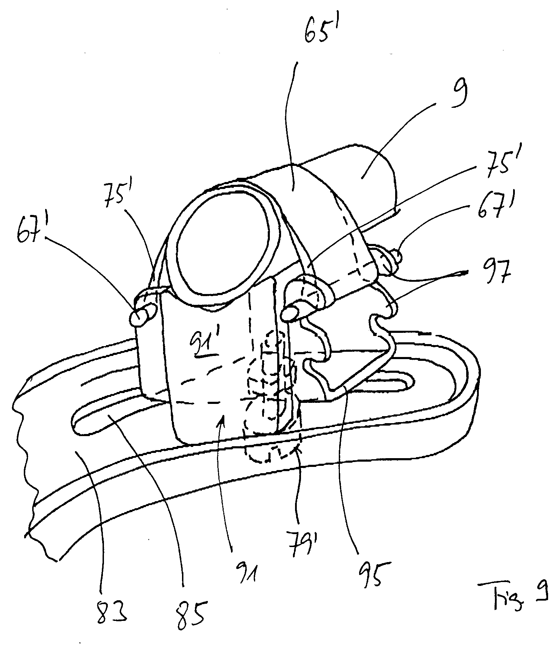

Zur Befestigung des Rahmen-Kupplungselementes 11 an dieser Kettenstrebe 7 dient ein in Figur 8 in ausgebauter Seitendarstellung wiedergegebenes Spannband 65 in der Regel aus Metall.

Dieses Spannband 65 ist jeweils an seinen gegenüberliegenden Enden gabelförmig zweigeteilt. Die jeweils beiden Spannbandabschnitte 65' sind einmal um einen Einhängstift 67 und am gegenüberliegenden Ende um einen Spannbolzen 69 jeweils unter Bildung einer Lasche 70 umgelegt und an der rückwärtigen Seite an entsprechenden Punktschweiß-Stellen 71 mit dem vorlaufenden Abschnitt des Spannbandes 65 verschweißt. Andere geeignete Materialien und feste Verbindungsmöglichkeiten der jeweiligen Enden des Spannbandes 65 an dem mittleren Spannband-Abschnitt sind ebenso denkbar.

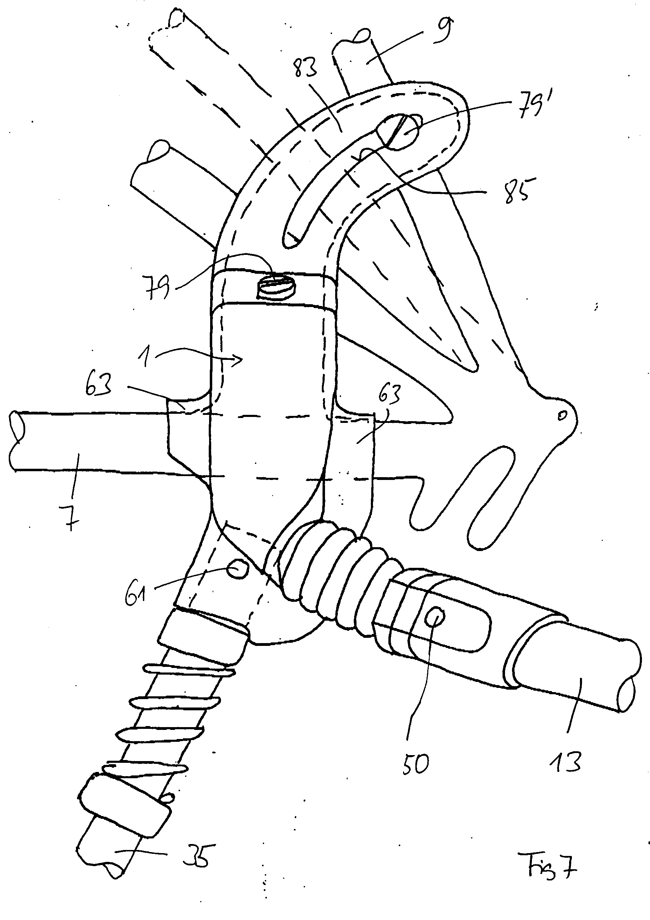

Aus Figur 6 ist ersichtlich, daß der Einhängstift beispielsweise etwa in Höhe der Kettenstrebe seitlich versetzt an dem Rahmen-Kupplungselement 11, d.h. an der Montageplatte 15, verankert wird. Dies kann beispielsweise dadurch erfolgen, daß bei der Seitendarstellung gemäß Figur 7 jeweils links und rechts im mittleren Abschnitt der Montageplatte 15 an einem dort im wesentlichen wieder quer zur Zeichenebene abgekantet gewinkelt verlaufenden Montageplattenabschnitt in Höhe der Kettenstrebe 7 eine Langlochausnehmung vorgesehen ist, durch welche der Einhängstift von außen her in das Rahmen-Kupplungselement 11 eingehängt werden kann. Geht man davon aus, daß der Kupplungsstift, wie in Figur 8 dargestellt ist, jeweils außenliegende Kopfteile mit größerem Außendurchmesser als dem mittleren Zwischendurchmesser aufweist, so besteht dann die Möglichkeit, daß bei entsprechender Dimensionierung in Längsrichtung dieser Einhängstift von außen her durch die langlochähnlichen Ausnehmungen 73 und durch die dahinter in richtiger Ausrichtung gebrachte Laschenaufnahme 75 des umgelegten Endes 65' des Spannbandes 65 und durch das deckungsgleich liegende weitere langlochähnliche Loch im hinteren Flanschabschnitt der Montageplatte hindurchgesteckt und anschließend in Zugrichtung so verstellt wird, daß die mit größerem Außendurchmesser versehenen Kopfendabschnitte 77 des Einhängstiftes 67 über die Langlochausnehmung mit geringerem Durchmesser übergreifend in der Langlochausnehmung axial unverschieblich am Rahmenelement gehalten sind und dadurch das eine Laschenende des Spannbandes 65 ebenfalls unverlierbar fest halten.

Das Laschenband ist dann an der Rückseite der Kettenstrebe 5 nach oben geführt. Von oben her wird nunmehr durch eine Bohrung eine Spannschraube 79 in das Rahmen-Kupplungselement so eingeführt und in eine Gewindebohrung 81 in den das andere Laschenende des Spannbandes haltenden Spannbolzen 69 eingedreht und so festgezogen, daß eine ausreichend feste Sicherung des Rahmen-Kupplungselementes an der Kettenstrebe gewährleistet wird.

Als zweite Befestigung dient ein weiteres Spannband, d.h. eine weitere Klemmeinrichtung.

Diese weitere Klemmeinrichtung ist an der Sitzstrebe 9 angebracht. Um eine Anbringung des Rahmen-Kupplungselementes bei unterschiedlichen Fahrradrahmen zu gewährleisten, umfaßt das Rahmen-Kupplungselement obenliegend einen bogenförmigen und eine intergrierte Verstell- und Anpaßmöglichkeit ermöglichenden Montageabschnitt 83 mit einer ebenso bogenförmigen Langlochausnehmung 85. Hier hindurch greift eine Feststellschraube 79', die mit dem in Figur 8 gezeigten Spannband 89 und einem vorzugsweise aus Kunststoff bestehenden prismatischen, im Querschnitt U- oder boxförmig gestalteten Gegenblock 91 und einem in dieser Ausnehmung geführten Spannelement 93 zusammenwirkt.

Anhand von Figur 9 ist in schematischer rückwärtiger Darstellung die Klemmeinrichtung zur Befestigung an der Sitzstrebe 9 gezeigt.

Die Klemmeinrichtung umfaßt ein mit einer prismatischen, d.h. winkelförmig bis bogenförmig konkaven Anlagefläche ausgestaltetes und an der Sitzstrebe 7 anliegendes, vorzugsweise aus Kunststoff bestehendes Gegenstück 91. Dieses weist einen im Ausführungsbeispiel gezeigten U-förmig begrenzten Aufnahmeraum zwischen den gegenüberliegenden Schenkelabschnitten 91' des Gegenstückes 91 auf, in welchem ein Zugelement 95 mit geringerer Höhe als die Schenkelhöhe der Schenkel 91 geführt ist. An diesem Zugelement 95 ist das erwähnte Spannband 89 verankert, welches an einem hintenliegenden fest verankerten Einhängstift 67' mit seiner Lasche und über einen in Figur 8 rechtsliegenden weiteren Einhängstift 67' an einer entsprechenden Zahnung verankerbar ist. Bei der Montage wird das Band entsprechend umgelegt und der mit der Lasche unverlierbar gehaltene Einhängstift 67' an einer entsprechenden Rastzahnung 97 eingehängt und von außen her die erwähnte Spannschraube 79' fest eingedreht. Diese greift in eine entsprechende Gewindebohrung in der Basisplatte des Zugelementes 95 ein und zieht dieses zunehmend mehr von der rückwärtigen Seite her auf den in Figur 6 und 7 gezeigten Montageabschnitt 83 zu, und zwar unter gleichzeitiger zunehmender Spannung des Spannbandes.

Der an der entsprechenden Rastzahnung 97 einhängbare Spannstift kann zwischen den Zahnungen liegend jeweils einen ringförmigen übergreifenden Flanschabschnitt aufweisen, so daß dieser Stift nicht axial aus der Zahnung herausgleiten kann.

Der Montageabschnitt 83 erlaubt beispielsweise eine analoge Befestigung auch dann, wenn beispielsweise die Sitzstrebe nicht die in Figur 7 in Form von durchgezogenen Linien, sondern in Form von strichlierten Linien nur beispielhaft dargestellte Steigung aufweist. Das Rahmen-Kupplungselement ist aber auch dann an dem Fahrradrahmen montierbar, wenn beispielsweise - wie ebenfalls in Figur 7 dargestellt ist - noch eine zusätzliche zwischen der Ketten- und der Sitzstrebe verlaufende Mittelstrebe 101 vorgesehen ist. Das Rahmen-Kupplungselement 11 überbrückt dabei diese Mittelstrebe.

## Patentansprüche

1. Kupplung zum Anhängen eines Fahrradanhängers an einem Fahrradrahmen, und zwar in dem aus der Ketten- und der Sitzstrebe (7, 9) gebildeten und das Hinterrad (5) stützenden Winkelbereich des Fahrradrahmens, mit einem daran montierbaren und an der Ketten- und Sitzstrebe (7, 9) abgestützten Rahmen-Kupplungselement (11), an welchem ein Deichsel-Kupplungselement als Zugverbindung zur Anhänger-Deichsel (13) angreift, **dadurch gekennzeichnet**, daß das Rahmen-Kupplungselement (11) einen Montageansatz (27) umfaßt, an welchem ein verschwenkbarer Fahrradständer (35) mittels eines Deichsel-Kopplungselementes kuppelbar ist, welches aus einem kardanischen Gelenk besteht, wobei eine Kardangelenkhälfte (41') zumindest mittelbar über einen eine Verdrehung um eine zu den Kardanachsen weitere Achse erlaubenden Verdrehansatz (45) gehalten ist.

2. Kupplung nach Anspruch 1, **dadurch gekennzeichnet**, daß der Montageansatz (27) als bis unter die Kettenstrebe (7) reichende Verlängerung des an der Ketten- und Sitzstrebe (7, 9) abgestützen Rahmen-Kupplungselement (11) ausgebildet ist.

3. Kupplung nach Anspruch 1 oder 2, **dadurch gekennzeichnet**, daß das Rahmen-Kupplungselement (11) zweischalig ausgebildet ist und die nach außen weisende wie die zum Hinterrad (5) weisende Seite der Ketten- wie der Sitzstrebe (7, 9) in montiertem Zustand sandwichartig umfaßt.

4. Kupplung nach einem der Ansprüche 1 bis 3, **dadurch gekennzeichnet**, daß der Montageansatz (27) einen zweiten Wandabschnitt (29) aufweist, der über eine Biegekante (31) mit einem dazu zumindest teilweise deckungsgleichen, im seitlichen Abstand dazu liegenden Wandabschnitt (31) versehen ist, zwischen denen der Verschwenkansatz des Fahrradständers (35) gehalten ist.

5. Kupplung nach einem der Ansprüche 1 bis 4, **dadurch gekennzeichnet**, daß an der, an der Ketten- und Sitzstrebe (7, 9) gegenüberliegend zum Hinterrad (5) anbringbaren Montageplatte (15) ein nach außen wegstehender Winkelansatz (37) ausgebildet ist, an welchem das Deichsel-Kopplungselement anbringbar ist.

6. Kupplung nach einem der Ansprüche 1 bis 5, **dadurch gekennzeichnet**, daß das kardanische Gelenk in Zug- und Schubrichtung spielfrei gestaltet ist.

7. Kupplung nach einem der Ansprüche 1 bis 6, **dadurch gekennzeichnet**, daß das kardanische Gelenk (41) aus zwei unverlierbar sich durchsetzenden Ösen gebildet ist.

8. Kupplung nach einem der Ansprüche 1 bis 7, **dadurch gekennzeichnet**, daß die beiden Kupplungshälften (41', 41'') des kardanischen Gelenkes (41) über ein Dämpfungselement (51) verbunden sind.

9. Kupplung nach Anspruch 8, **dadurch gekennzeichnet**, daß das Dämpfungselement (51) mit zwei um 90° versetzt zueinander verlaufenden Durchtrittsbohrungen versehen ist, durch welche die entsprechenden Ösenabschnitte (53) der beiden Kardangelenkhälften (41', 41'') verlaufen.

10. Kupplung nach einem der Ansprüche 1 bis 9, **dadurch gekennzeichnet**, daß die zweite Kupplungshälfte (41'') anhängerseitig an einem Verdrehansatz (45) verankert ist.

11. Kupplung nach einem der Ansprüche 1 bis 10, **dadurch gekennzeichnet**, daß ein Sicherheits-Schnellverschluß zum Anhängen und Lösen der Anhänger-Deichsel (13) vorgesehen ist.

12. Kupplung nach Anspruch 11, **dadurch gekennzeichnet**, daß der Sicherheits-Schnellverschluß zwischen dem anhängerseitigen Verdrehansatz (45) und einem an der Anhänger-Deichsel (13) festsitzenden Steckansatz (47) ausgebildet ist.

13. Kupplung nach Anspruch 11 oder 12, **dadurch gekennzeichnet**, daß der Sicherheits-Schnellverschluß in Form eines Schnapp- oder Bajunettverschlusses gebildet ist.

14. Kupplung nach einem der Ansprüche 11 bis 13, **dadurch gekennzeichnet**, daß der Sicherheits-Schnellverschluß zu dessen Freigabe eine zusätzlich betätigbare Auslösesicherung umfaßt.

15. Kupplung nach einem der Ansprüche 1 bis 14, **dadurch gekennzeichnet**, daß das Rahmen-Kupplungselement (11) einschalig ausgebildet ist und mittels einer oder vorzugsweise zweier Klemmeinrichtungen an zumindest zwei Streben des Fahrradrahmens befestigbar ist.

16. Kupplung nach einem der Ansprüche 1 bis 15, **dadurch gekennzeichnet**, daß das nach Art einer Montage- oder Anbauplatte gestaltete Rahmen-Kupplungselement (11) mittels eines die Streben des Fahrradrahmens an der zum Rahmen-Kupplungselement (11) jeweils gegenüberliegenden Anbauseite übergreifenden Spannbandes (65, 89) befestigbar ist.

17. Kupplung nach Anspruch 16, **dadurch gekennzeichnet**, daß das Spannband (65, 65') an seinem einen Ende mittels eines Einhängstiftes (67, 67') und an seinem gegenüberliegenden Ende mittels eines Spannbolzens (69) unverlierbar gehalten ist.

18. Kupplung nach Anspruch 16, **dadurch gekennzeichnet**, daß das Spannband (65) an seinen beiden gegenüberliegenden Enden vorzugsweise mittels Einhängstiften (67') verankert ist, und zwar an einem Zugelement (95), welches mittels einer Spannschraube (79') relativ gegenüber einem, ein Widerlager für die betreffende Strebe bildenden Gegenstückes (91) verspannbar ist.

19. Kupplung nach Anspruch 18, **dadurch gekennzeichnet**, daß das Zugelement (95) in einer Ausnehmung in dem Gegenstück (91) mittels der Spannschraube (79) axial verspannbar ist, wobei das Gegenstück (91) zumindest zwei das Spannelement (93) dazwischen aufnehmende Verankerungsschenkel (91') aufweist, die sich zwischen dem nach Art einer Anbauplatte gestalteten Rahmen-Kupplungselement (11) und der betreffenden Befestigungsstelle an einer Strebe jeweils zumindest mittelbar abstützt.

20. Kupplung nach Anspruch 17, **dadurch gekennzeichnet**, daß an dem Spannbolzen (69) ein an der Anbauplatte des Rahmen-Kupplungselementes (11) abgestützte und angreifende Spannschraube (79) in eine entsprechende Gewindebohrung (81) eingreift, worüber das am anderen Ende am Einhängstift an der Anbauplatte des Rahmen-Kupplungselementes (11) verankerte Spannband (65) festspannbar ist.

21. Kupplung nach einem der Ansprüche 1 bis 20, **dadurch gekennzeichnet**, daß das nach Art einer Anbauplatte gestaltete Rahmen-Kupplungselement (11) eine im Querschnitt prismatische, vorzugsweise winkel-, insbesondere rechtwinkelförmige Auflage (63) aufweist, die sich an einer Strebe, bevorzugt der Kettenstrebe (7), des Fahrradrahmens abstützt.

22. Kupplung nach einem der Ansprüche 1 bis 21, **dadurch gekennzeichnet**, daß das nach Art einer Anbauplatte gestaltete Rahmen-Kupplungselement (11) eine, eine Anpaßmöglichkeit an den unterschiedlichen Verlauf der gegenüber der Kettenstrebe ansteigend verlaufenden Fahrradrahmen-Strebe, bevorzugt der Sitzstrebe (9), aufweist.

## Claims

1. Coupling for hitching a bicycle trailer to a bicycle frame, to be precise in the angled bicycle-frame region which is formed from the chain strut (7) and the seat strut (9) and supports the rear wheel (5), having a frame coupling element (11) which can be mounted on said angled bicycle-frame region, is supported on the chain strut (7) and seat strut (9) and on which a drawbar coupling element acts as a tractive connection to the trailer drawbar (13), characterized in that the frame coupling element (11) comprises an assembly extension (27) on which a pivotable bicycle stand (35) can be coupled by means of a drawbar linking element which comprises a universal joint, a universal-joint half (41') being retained at least indirectly via a rotary extension (45) which permits rotation around an additional axis to the universal axes.

2. Coupling according to Claim 1, characterized in that the assembly extension (27) is designed as a lengthened section, reaching to beneath the chain strut (7), of the frame coupling element (11) supported on the chain strut (7) and the seat strut (9).

3. Coupling according to Claim 1 or 2, characterized in that the frame coupling element (11) is designed in the manner of two shells and, in the assembled state, encloses, in a sandwich-like manner, those sides of the chain strut (7) and of the seat strut (9) which are oriented outwards and towards the rear wheel (5).

4. Coupling according to one of Claims 1 to 3, characterized in that the assembly extension (27) has a second wall section (29) which is provided, via a bent edge (31), with a wall section (30) which is at least partially congruent with the wall section (29) and is located at a lateral distance therefrom, the pivot extension of the bicycle stand (35) being retained between the wall section (29) and the wall section (30).

5. Coupling according to one of Claims 1 to 4, characterized in that an outwardly projecting angle extension (37), on which the drawbar linking elements can be fitted, is formed on the assembly plate (15), which can be fitted on the chain strut (7) and seat strut (9), opposite the rear wheel (5).

6. Coupling according to one of Claims 1 to 5, characterized in that the universal joint is configured so as to be without play in the pulling and pushing direction.

7. Coupling according to one of Claims 1 to 6, characterized in that the universal joint (41) is formed from two eyelets which pass through one another in a captive manner.

8. Coupling according to one of Claims 1 to 7, characterized in that the two coupling halves (41', 41'') of the universal joint (41) are connected via a damping element (51).

9. Coupling according to Claim 8, characterized in that the damping element (51) is provided with two through-passage bores which are offset through 90° with respect to one another and through which the corresponding eyelet sections (53) of the two universal-joint halves (41', 41'') run.

10. Coupling according to one of Claims 1 to 9, characterized in that, on the trailer side, the second coupling half (41'') is anchored on a rotary extension (45).

11. Coupling according to one of Claims 1 to 10, characterized in that a quick-action safety closure is provided for hitching and releasing the trailer draw-bar (13).

12. Coupling according to Claim 11, characterized in that the quick-action safety closure is formed between the trailer-side rotary extension (45) and a plug-in extension (47) which is fixed on the trailer drawbar (17).

13. Coupling according to Claim 11 or 12, characterized in that the quick-action safety closure is in the form of a snap-action or bayonet closure.

14. Coupling according to one of Claims 11 to 13, characterized in that, for its release, the quick-action safety closure comprises an additionally actuable safety release mechanism.

15. Coupling according to one of Claims 1 to 14, characterized in that the frame coupling element (11) is designed in the manner of one shell and can be fastened on at least two struts of the bicycle frame by means of one or, preferably, two clamping devices.

16. Coupling according to one of Claims 1 to 15, characterized in that the frame coupling element (11), which is configured in the manner of an assembly or add-on plate, can be fastened by means of a tensioning strip (65, 89) which engages over the struts of the bicycle frame on the add-on side located opposite the frame coupling element (11) in each case.

17. Coupling according to Claim 16, characterized in that the tensioning strip (65, 65') is retained in captive fashion, at one end, by means of a hook-pin (67, 67') and, at its opposite end, by means of a tensioning bolt (69).

18. Coupling according to Claim 16, characterized in that the tensioning strip (65) is preferably anchored, at its two opposite ends, by means of hook-in pins (67'), to be precise on a tension element (95) which can be braced, by means of a tensioning screw (79'), relative to a counterpart (91) which forms an abutment for the relevant strut.

19. Coupling according to Claim 18, characterized in that the tension element (95) can be braced axially, by means of the tensioning screw (79), in a recess in the counterpart (91), the counterpart (91) having at least two anchoring legs (91') which receive the tensioning element (93) between them and are supported at least indirectly in each case between the frame coupling element (11), which is configured in the manner of an add-on plate, and the relevant fastening location on a strut.

20. Coupling according to Claim 17, characterized in that, on the tensioning bolt (69), a tensioning screw (79), which is supported, and acts, on the add-on plate of the frame coupling element (11), engages in a corresponding threaded bore (81), whereby it is possible to tension the tensioning strip (65), which is anchored at the other end, at the hook-in pin, on the add-on plate of the frame coupling element (11).

21. Coupling according to one of Claims 1 to 20, characterized in that the frame coupling element (11), which is configured in the manner of an add-on plate, has a cross-sectionally prismatic, preferably angled, in particular right-angled, rest (63) which is supported on a strut, preferably the chain strut (7), of the bicycle frame.

22. Coupling according to one of Claims 1 to 21, characterized in that the frame coupling element (11), which is configured in the manner of an add-on plate, is capable of being adapted to the different progression of the bicycle-frame strut, preferably the seat strut (9), which slopes upwards with respect to the chain strut.

## Revendications

1. Attelage pour atteler une remorque de bicyclette à un cadre de bicyclette, à savoir dans la région angulaire du cadre de bicyclette, formée par le montant de chaîne et par le montant de siège (7, 9) et supportant la roue arrière (5), comportant un élément d'attelage de cadre (11) susceptible d'être monté sur ledit cadre et supporté sur le montant de chaîne et de siège (7, 9) et attaqué par un élément d'attelage à timon en tant que liaison de traction vers le timon de remorque (13), caractérisé en ce que l'élément d'attelage de cadre (11) comporte un talon de montage (27) auquel peut être accouplée une béquille de bicyclette basculante (35) au moyen d'un élément d'attelage à timon constitué par un joint de Cardan, une moitié du joint de Cardan (41') étant retenue du moins indirectement via un talon rotatif (45) qui permet une rotation autour d'un axe supplémentaire aux axes de Cardan.

2. Attelage selon la revendication 1, caractérisé en ce que le talon de montage (27) est réalisé sous forme d'un prolongement de l'élément d'attelage de cadre (11) supporté par le montant de chaîne et de siège (7, 9), ledit prolongement s'étendant jusque au-dessous du montant de chaîne (7).

3. Attelage selon l'une ou l'autre des revendications 1 et 2, caractérisé en ce que l'élément d'attelage de cadre (11) est réalisé à la manière de deux coques, et en ce qu'il englobe à l'état monté à la manière de sandwich autant le côté dirigé vers l'extérieur du montant de chaîne et de siège (7, 9) que le côté dirigé vers la roue arrière (5).

4. Attelage selon l'une quelconque des revendications 1 à 3, caractérisé en ce que le talon de montage (27) présente un second secteur de paroi (29) qui est pourvu, via une arête de flexion (31), d'un secteur de paroi (31) du moins partiellement en chevauchement avec celui-ci et situé à une distance latérale de celui-ci, entre lesquels est retenu le talon de basculement de la béquille de bicyclette (35).

5. Attelage selon l'une quelconque des revendications 1 à 4, caractérisé en ce qu'il est prévu, sur la plaque de montage (15) susceptible d'être agencée en vis-à-vis de la roue arrière (5) sur le montant de chaîne et de siège (7, 9), un talon anguleux (37) en saillie vers l'extérieur sur lequel l'élément d'attelage à timon est susceptible d'être monté.

6. Attelage selon l'une quelconque des revendications 1 à 5, caractérisé en ce que le joint de Cardan est réalisé sans jeu en direction de traction et de poussée.

7. Attelage selon l'une quelconque des revendications 1 à 6, caractérisé en ce que le joint de Cardan (41) est formé par deux oeillets qui se traversent de façon imperdable.

8. Attelage selon l'une quelconque des revendications 1 à 7, caractérisé en ce que les deux moitiés d'attelage (41', 41'') du joint de Cardan (41) sont reliées via un élément d'amortissement (51).

9. Attelage selon la revendication 8, caractérisé en ce que l'élément d'amortissement (51) est pourvu de deux ouvertures de passage s'étendant en décalage de 90° l'une par rapport à l'autre, à travers lesquelles s'étendent les secteurs d'oeillet correspondants (53) des deux moitiés de joint de Cardan (41', 41'').

10. Attelage selon l'une quelconque des revendications 1 à 9, caractérisé en ce que la seconde moitié d'attelage (41'') est ancrée, du côté remorque, à un talon rotatif (45).

11. Attelage selon l'une quelconque des revendications 1 à 10, caractérisé en ce qu'il est prévu une fermeture rapide de sécurité pour atteler et détacher le timon de remorque (13).

12. Attelage selon la revendication 11, caractérisé en ce que la fermeture rapide de sécurité est réalisée entre le talon rotatif (45) côté remorque et un talon d'enfichage (47) prévu fermement sur le timon de remorque (13).

13. Attelage selon l'une ou l'autre des revendications 11 et 12, caractérisé en ce que la fermeture rapide de sécurité est réalisée sous forme d'une fermeture à enclenchement ou à baïonnette.

14. Attelage selon l'une quelconque des revendications 11 à 13, caractérisé en ce que la fermeture rapide de sécurité comporte une sécurité de déclenchement susceptible d'être actionnée en supplément pour sa libération.

15. Attelage selon l'une quelconque des revendications 1 à 14, caractérisé en ce que l'élément d'attelage de cadre (11) est réalisé sous forme d'une seule coque et est susceptible d'être fixé au moyen d'un ou de préférence de deux dispositifs à pince sur au moins deux montants du cadre de bicyclette.

16. Attelage selon l'une quelconque des revendications 1 à 15, caractérisé en ce que l'élément d'attelage de cadre (11) réalisé à la manière d'une plaque de montage ou d'assemblage peut être fixé au moyen d'un ruban de serrage (65, 89) qui recouvre les montants du cadre de bicyclette sur le côté de montage respectivement en vis-à-vis de l'élément d'attelage de cadre (11).

17. Attelage selon la revendication 16, caractérisé en ce que le ruban de serrage (65, 65') est retenu de façon imperdable à l'une de ses extrémités au moyen d'une tige d'accrochage (67, 67') et à son extrémité opposée au moyen d'un boulon de serrage (69).

18. Attelage selon la revendication 16, caractérisé en ce que le ruban de serrage (65) est ancré à ses deux extrémités opposées de préférence au moyen de tiges d'accrochage (67'), à savoir sur un élément de traction (95) qui peut être serré au moyen d'une vis de serrage (79') par rapport à un élément complémentaire (91) formant un appui de montage pour le montant correspondant.

19. Attelage selon la revendication 18, caractérisée en ce que l'élément de traction (95) peut être serré axialement dans un évidement dans l'élément complémentaire (91) au moyen d'une vis de serrage (79), l'élément complémentaire (91) présentant du moins deux bras d'ancrage (91') recevant entre eux l'élément de serrage (93), qui s'appuient respectivement du moins indirectement entre l'élément d'attelage de cadre (11) réalisé à la manière d'une plaque de montage et l'emplacement de fixation correspondant sur un montant.

20. Attelage selon la revendication 17, caractérisé en ce que sur le boulon de serrage (69), une vis de serrage (79) appuyée contre la plaque de montage de l'élément d'attelage de cadre (11) et attaquant celle-ci s'engage dans un perçage taraudé correspondant (81), par l'intermédiaire duquel peut être serré le ruban de serrage ancré à l'autre extrémité sur la tige d'accrochage sur la plaque de montage de l'élément d'attelage de cadre (11).

21. Attelage selon l'une quelconque des revendications 1 à 20, caractérisé en ce que l'élément d'attelage de cadre (11) réalisé à la manière d'une plaque de montage présente un élément (63) de section transversale prismatique, de préférence anguleuse, en particulier rectangulaire, qui s'appuie contre un montant, de préférence contre le montant de chaîne (7), du cadre de bicyclette.

22. Attelage selon l'une quelconque des revendications 1 à 21, caractérisé en ce que l'élément d'attelage de cadre (11) réalisé à la manière d'une plaque de montage présente une possibilité d'adaptation au tracé différent du montant de cadre de bicyclette, de préférence du montant de siège (9), qui s'étend en montant par rapport au montant de chaîne.
